# FASCICULE DE BREVET EUROPEEN

(11) **EP 0 449 709 B1**
(45) Date de publication et mention de la délivrance du brevet: **09.03.1994**
(21) Numéro de dépôt: 91400779.4
(22) Date de dépôt: 22.03.1991
(51) Int. Cl.: B25B 23/04, B23P 19/06

(54) **Tête de visseuse automatique**
Automatischer Schrauberkopf
Automatic screwdriver head

(30) Priorité: 30.03.1990 FR 9004062
(43) Date de publication de la demande: 02.10.1991
(73) Titulaire: LES APPLICATIONS DE LA VIBRATION (A.D.V.) Société Anonyme, F-91230 Montgeron (FR)
(72) Inventeur: Lebreuil, Jean-Claude Gaston Clément, F-94 290 Villeneuve Le Roi (FR)
(74) Mandataire: Vander-Heym, Serge

(56) Documents cités:
- EP-A- 0 350 370
- DE-A- 1 478 906
- DE-A- 1 728 540
- DE-A- 1 961 216
- DE-A- 2 232 725
- FR-A- 2 188 480
- FR-A- 2 270 996
- FR-A- 2 635 999
- US-A- 3 283 791
- US-A- 3 314 458

## Description

La présente invention est relative à des perfectionnements aux têtes de visseuses automatiques.

Une tête de visseuse comporte un corps à l'intérieur duquel est disposée une tige, fixe axialement, se terminant à sa partie inférieure par un tournevis. La tige tournevis est entourée par un fourreau, mobile axialement par rapport au corps, présentant à sa partie inférieure un orifice de sortie de la vis et, en amont de cet orifice, un canal d'amenée de ladite vis. L'orifice précité est équipé d'une pince susceptible de retenir la tête de la vis et de s'ouvrir sous l'effet d'un effort axial.

Le fourreau est soumis à l'action d'un ressort qui, en l'absence de forces antagonistes, tend à le pousser à l'opposé du corps. De cette façon, le tournevis est maintenu éloigné de l'orifice de sortie de la vis ce qui permet l'approvisionnement. La distance, séparant l'extrémité du tournevis et la tête de la vis, est au moins égale à la profondeur de vissage c'est-à-dire à la longueur de la vis.

Lors d'une opération de vissage, la visseuse étant approvisionnée, on applique l'extrémité de la vis sur le support devant la recevoir. Sous l'effet de cette pression la vis disparaît dans le fourreau. En accentuant la pression la tête précitée rencontre l'extrémité du tournevis et le vissage peut commencer.

Un tel dispositif ne donne pas satisfaction notamment pour les deux raisons ci-après :
- l'extrémité de la vis est rapidement masquée par la partie inférieure du fourreau et le positionnement de cette dernière est donc très aléatoire;
- à chaque opération de vissage, un certain temps est perdu entre le moment où la pointe de la vis est appliquée sur le support et celui où sa tête rencontre le tournevis.

Le document DE-A-2232725 décrit une visseuse dont le tournevis est logé dans un fourreau mobile axialement.

Le document DE-A-1961216 décrit une visseuse comportant un tournevis logé dans un fourreau soumis à l'action d'un ressort dont la détente permet l'escamotage dudit tournevis à l'intérieur dudit fourreau.

Toutes les deux visseuses susmentionées, qui concernent le même problème que la présente invention, sont pourtant relativement compliquées et chères.

La présente invention qui remédie à ces inconvénients est relative à une tête de visseuse comportant un corps et un fourreau mobile axialement entourant le tournevis, caractérisée en ce que le déplacement axial du fourreau est déterminé par celui d'un manchon, entourant ledit fourreau, mobile axialement à l'intérieur du corps et déplacé sous l'effet de la pression d'un fluide, ce déplacement déterminant, dans le même sens, le déplacement du fourreau, l'effort nécessaire au déplacement dudit fourreau étant transmis à ce dernier par l'intermédiaire d'un ressort et en ce que le déplacement du manchon, sous l'effet de la pression de fluide, s'effectue à l'encontre de l'action d'un ressort antagoniste dont la détente détermine le déplacement, en sens inverse, dudit manchon et l'entraînement positif du fourreau.

La présente invention sera mieux comprise par la description qui va suivre faite en se référant aux dessins annexés, à titre d'exemple indicatif seulement, sur lesquels **:**
La figure 1 est une vue, en coupe verticale, d'une tête de visseuse conforme à l'invention, ladite tête étant approvisionnée;
La figure 2 est une vue, analogue à la figure 1, montrant la position des organes mobiles en fin de vissage;
La figure 3 est une vue,analogue à celle 1,montrant une phase de l'approvisionnement;
-La figure 4 est une vue partielle, en coupe et à plus grande échelle, montrant une variante de réalisation.

En se reportant aux dessins, on voit que, de la façon conue, la tête de visseuse se compose d'un corps 1, d'un tournevis 2 et d'un fourreau 3 présentant à sa partie inférieure un orifice 4 de sortie de la vis V. L'orifice 4 est muni d'une pince usuelle, non représentée, de retenue de la tête de la vis.

L'orifice 4 forme la partie inférieure d'un embout 5 fixé sur le fourreau 3 et comportant le canal 6 d'arrivée de la vis.

Selon l'invention, le fourreau 3 est guidé dans un manchon 7, mobile axialement dans un alésage 8 du corps 1, la partie supérieure dudit manchon formant un piston 9 constamment poussé vers le haut sous l'action d'un ressort 10.

L'extrémité inférieure du manchon 7 peut s'étendre au-delà du corps 1 pour entraîner, dans ce déplacement, le fourreau 3. Ce résultat est obtenu en interposant un ressort 11 entre l'extrémité inférieure du manchon et le fourreau 3.

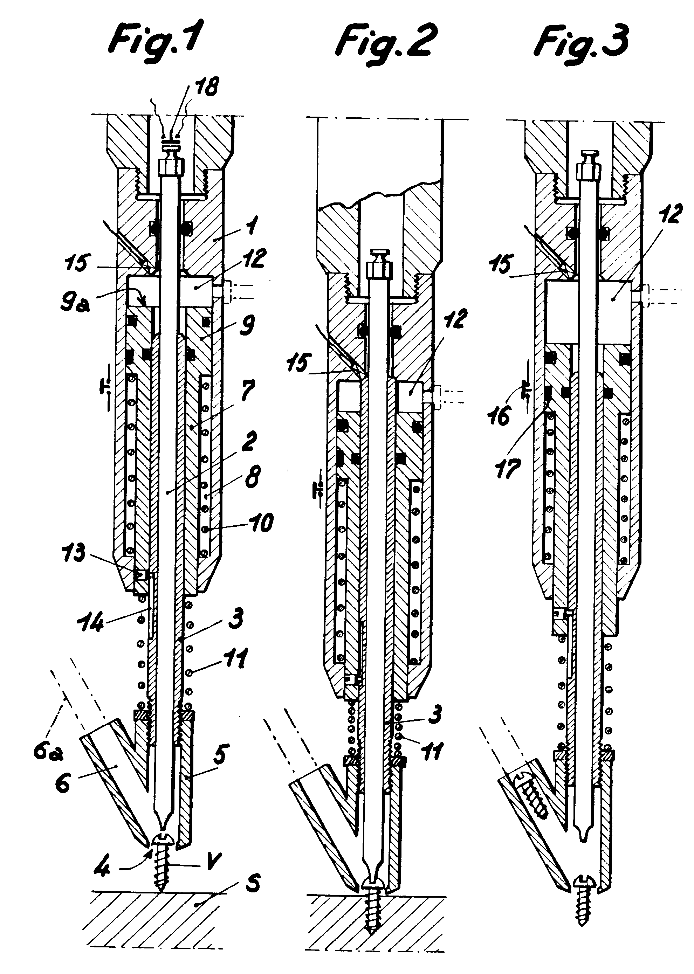

En envoyant un fluide sous pression, dans la chambre 12, sur la tête 9a du piston, on provoque le déplacement du manchon 7 qui pousse, vers le bas, le fourreau 3 par l'entremise du ressort 11. Cette action a pour effet de placer les organes mobiles dans la position représentée sur la figure 3. Dans cette position, l'orifice 4 est dégagé et il est alors possible d'y placer une vis V.

Si on on laisse échapper le fluide sous pression hors de la chambre 12, le ressort 10 se détend, repousse le manchon 7 qui entraîne dans son déplacement le fourreau 3. Cet entraînement est obtenu, par exemple, par une vis 13 s'étendant dans une rainure longitudinale 14 du fourreau. 3. A la fin du déplacement des pièces 7 et 3, l'extrémité active du tournevis est située à proximité immédiate de la tête de la vis V (figure 1).

Durant le vissage le ressort 11 est comprimé et le fourreau 3 pénètre dans le corps 1. Lorsque le vissage est terminé, la tête de vissage étant soulevée, le ressort 11 se détend et le fourreau 3 vient occuper la position montrée sur la figure 1.

Selon l'invention, des moyens sont prévus pour réaliser un approvisionnement automatique.

A cet effet, des moyens son prévus pour détecter la position du manchon lorsque il occupe la position représentée sur la figure 3 et pour détecter celle du fourreau 3 lorsqu'il occupe la position représentée sur la figure 2 c'est-à-dire en fin de vissage.

A la partie supérieure de la chambre 12 est disposé un détecteur de position 15, d'un type connu, qui est susceptible de délivrer un signal lorsque l'extrémité supérieure du fourreau 3 est dans la position représentée sur la figure 2. Ce signal est utilisé pour commander l'ouverture d'une électrovanne, non représentée, qui dirige le fluide sous pression vers la chambre 12. Le piston 9 est refoulé et sa position de fin de course, celle montrée sur la figure 3, est détectée au moyen,par exemple, d'un contacteur 16 sensible à la présence d'une masse magnétique 17 portée par le piston 9. Lorsque le contacteur est sensibilisé il délivre un signal qui est utilisé pour commander l'envoi d'une vis dans le canal 6. Les vis sont stockées dans la position requise à l'entrée d'un conduit souple tel que celui montré en 6a, un tel dispositif de sélection, de stockage et de libération des vis étant connu, il n'a pas été représenté.

Le signal délivré par le contacteur 16 est également utilisé, en coopération avec un dispositif de temporisation (non représenté), pour placer l'electrovanne précitée dans la position "échappement". En d'autres termes, on commence par introduire une vis dans l'orifice 4 puis, ensuite, on fait remonter l'ensemble 3-7. La visseuse est alors de nouveau approvisionnée et prête pour une nouvelle opération de vissage.

En ce qui concerne le vissage, il faut préciser que le tournevis 2, lorsqu'il est appliqué par l'opérateur contre la tête de la vis dont la pointe est en appui contre le support S, peut subir un faible déplacement axial à l'intérieur du corps 1, de l'ordre de 1 à 2 millimètres, pour actionner un contacteur 18 de commande de l'organe d'entraînement en rotation dudit tournevis. L'organe d'entraînement précité peut être placé sous la dépendance d'un limiteur de couple.

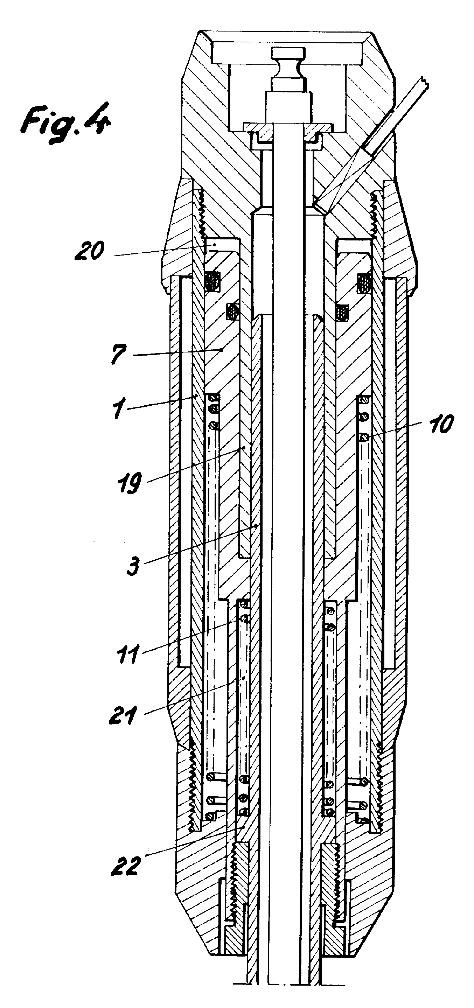

La variante de réalisation montrée sur la figure 4 reproduit les mêmes caractéristiques inventives que celles décrites ci-dessus mais, elle a toutefois le mérite d'être plus élaborée.

Ainsi, le corps 1 présente une jupe 19 s'étendant entre le fourreau 3 et le manchon 7. De cette façon, l'étanchéité de la chambre annulaire 20, analogue à celle 12, peut être réalisée dans de meilleures conditions.

Le ressort 11 n'est pas apparent mais est logé dans le corps 1 d'un espace annulaire 21, ménagé dans le manchon 7 entre ce dernier et le fourreau 3 qui présente une surface d'appui dudit ressort constituée par une collerette 22. La face inférieure de la collerette 22 est utilisée pour entraîner le fourreau 3 lors de la détente du ressort 10.

## Revendications

1. Tête de visseuse, comportant un corps (1) et un fourreau (3) mobile axialement entourant le tournevis, caractérisée en ce que le déplacement axial du fourreau (3) est déterminé par celui d'un manchon (7), entourant ledit fourreau, mobile axialement à l'intérieur du corps (1) et déplacé sous l'effet de la pression d'un fluide, ce déplacement déterminant, dans le même sens, le déplacement du fourreau (3), l'effort nécessaire au déplacement dudit fourreau étant transmis à ce dernier par l'intermédiaire d'un ressort (11) et en ce que le déplacement du manchon (7), sous l'effet de la pression de fluide, s'effectue à l'encontre de l'action d'un ressort antagoniste (10) dont la détente détermine le déplacement, en sens inverse, dudit manchon et l'entraînement positif du fourreau (3).

2. Tête de visseuse, selon la revendication 1, caractérisée en ce que des moyens sont prévus pour détecter la fin du déplacement du manchon (7), lesdits moyens étant utilisés pour, successivement, permettre à une vis (V) de parvenir, de la façon usuelle, jusqu'à l'embout (5) comportant l'orifice de sortie (4), et laisser échapper le fluide sous pression afin de permettre le déplacement dudit manchon sous l'action du ressort (10).

## Patentansprüche

1. Maschinenschrauberkopf mit einem Körper (1) und einem in Achsrichtung um den Schraubendreher beweglichen Futter (3), dadurch gekennzeichnet, daß die Verlagerung des Futters (3) in Achsrichtung von der Verlagerung des das Futter umgebenden Stutzens (7) abhängt, der im Inneren des Körpers (1) in Achsrichtung beweglich ist und unter dem Druck eines Mediums verlagert wird, wobei diese Verlagerung in derselben Richtung die Verlagerung des Futters (3) bestimmt und die zur Verlagerung des Futters erforderliche Kraft über eine Feder (11) auf dieses übertragen wird, sowie dadurch, daß die Verlagerung des Stutzens unter dem Druck des Mediums gegen die Kraft einer Feder (10) erfolgt, deren Entspannung die Verlagerung des Stutzens und den positiven Antrieb des Futters (3) bewirkt.

2. Maschinenschrauberkopf nach Patentanspruch 1, dadurch gekennzeichnet, daß Mittel zum Erkennen der Verlagerung des Stutzens (7) vorgesehen sind, die dazu verwendet werden, nacheinander eine Schraube (V) auf allgemein bekannte Weise bis zum mit einer Austrittsöffnung (4) versehenen Ende (5) zu befördern und das unter Druck befindliche Medium entweichen zu lassen, um die Verlagerung des Stutzens unter der Wirkung der Feder (10) zu ermöglichen.

## Claims

1. Screw driving machine head comprising a body (1) and an axially mobile sheath (3) encompassing the screwdriver, wherein the axial movement of the sheath (3) is determined by that of a sleeve (7) encompassing said sheath axially mobile inside the body (1) and moves under the effect of the pressure of a fluid, this movement determining in the same direction the movement of the sheath (3), the force required to move said sheath being transmitted to the latter by means of a spring (11), and wherein the movement of the sleeve (7) under the effect of fluid pressure is effected against the action of an opposing spring (10) whose pressure reduction determines the movement in a reverse direction of said sleeve and the positive drive of the sheath (3).

2. Screw driving machine head according to claim 1, wherein means are provided to detect the end of movement of the sleeve (7), said means being used to successively enable a screw (V) to normally arrive as far as a joining piece (5) comprising the outlet (4) and allow the under-pressure fluid to escape so as to allow said sleeve to move under the action of the spring (10).
